# EUROPÄISCHE PATENTSCHRIFT

(11) **EP 2 331 378 B1**
(45) Veröffentlichungstag und Bekanntmachung des Hinweises auf die Patenterteilung: **14.11.2012**
(21) Anmeldenummer: 09782965.9
(22) Anmeldetag: 14.09.2009
(51) Int. Cl.: B60W 20/00, B60K 6/48, B60W 10/06, B60W 10/08, B60W 10/02

(54) **VERFAHREN ZUM DIAGNOSTIZIEREN EINES FEHLERSTATUS EINER ANTRIEBSVORRICHTUNG SOWIE DIAGNOSEVORRICHTUNG UND ANTRIEBSSYSTEM**
METHOD FOR DIAGNOSING A FAILURE STATUS OF A DRIVE DEVICE, AND DIAGNOSTIC DEVICE AND DRIVE SYSTEM
PROCÉDÉ DE DIAGNOSTIC D'UN ÉTAT DE DÉFAILLANCE D'UN DISPOSITIF D'ENTRAÎNEMENT, DISPOSITIF DE DIAGNOSTIC ET SYSTÈME D'ENTRAÎNEMENT

(30) Priorität: 24.09.2008 DE 102008042307
(43) Veröffentlichungstag der Anmeldung: 15.06.2011
(73) Patentinhaber: Robert Bosch GmbH, 70442 Stuttgart (DE)
(72) Erfinder: KIESER, Joerg, 74321 Bietigheim (DE)
(86) Internationale Anmeldenummer: PCT/EP2009/061865
(87) Internationale Veröffentlichungsnummer: WO 2010/034637

(56) Entgegenhaltungen:
- EP-A2- 1 418 079
- EP-A2- 1 914 101
- WO-A1-2008/068930
- US-A1- 2006 137 921

## Beschreibung

Die Erfindung betrifft ein Verfahren zum Diagnostizieren eines Fehlerstatus einer Antriebsvorrichtung in einem Antriebssystem, insbesondere eines Kraftfahrzeugs, mit zumindest zwei Antriebsvorrichtungen, insbesondere einer elektrischen Maschine und einer Brennkraftmaschine, und mindestens einer die Antriebsvorrichtungen einstellbar koppelnden Trennkupplung. Die Erfindung betrifft ferner eine Diagnosevorrichtung und ein Antriebssystem.

### Stand der Technik

Antriebssysteme mit mehreren Antriebsvorrichtungen, die mittels mindestens einer Trennkupplung einstellbar koppelbar sind, können in verschiedenen Betriebsmodi betrieben werden. Beispielsweise kann ein Betrieb mit lediglich einer der Antriebsvorrichtungen vorgesehen sein, andererseits aber auch, durch Schließen der Trennkupplung, mit mehreren Antriebsvorrichtungen. Solche Antriebssysteme sind häufig als Hybridantriebssysteme ausgebildet, weisen also zumindest zwei unterschiedliche Antriebsvorrichtungen auf. Dabei werden in den meisten Fällen eine Brennkraftmaschine und eine elektrische Maschine gewählt. Bei solchen Hybridantriebssystemen wird ein Energiespeicher der elektrischen Maschine geladen, indem die elektrische Maschine als Generator betrieben und dabei von der Brennkraftmaschine angetrieben wird. Wenn das Fahrzeug in einem hybridischen Betriebsmodus betrieben wird, und somit die Trennkupplung geschlossen ist, die Antriebsvorrichtungen also gekoppelt sind, sind sowohl die Brennkraftmaschine als auch die elektrische Maschine mit einem Triebstrang des Kraftfahrzeugs gekoppelt. In diesem Betriebsmodus kann es zurzeit nicht erkannt werden, ob die Brennkraftmaschine tatsächlich ein positives Moment abgibt. Entfällt das Drehmoment der Brennkraftmaschine - beispielsweise durch einen Defekt im System, zum Beispiel bei Ausfall der Zündung - so wird es durch eine Regelungsvorrichtung des Antriebsystems mittels der elektrischen Maschine ausgeglichen. Dabei entleert sich der Energiespeicher, da kein Generatorbetrieb der elektrischen Maschine mehr durchgeführt werden kann. Bemerkt ein Fahrer des Kraftfahrzeugs nicht, dass die Brennkraftmaschine nicht mehr in Betrieb ist, so kann das Kraftfahrzeug für ihn unerwartet ausfallen. Bisherige Verfahren zum Diagnostizieren des Fehlerstatus einer einzelnen Antriebsvorrichtung in einem Antriebssystem werden selten durchgeführt, da eine Messung eines von der Brennkraftmaschine erzeugten Moments oder des von der Brennkraftmaschine und der elektrischen Maschine gemeinsam erzeugten Antriebsdrehmoments zusätzliche Messvorrichtungen bedingt und damit kostenaufwendig ist.

Aus dem Stand der Technik ist die EP 1 418 079 A2 bekannt. Diese betrifft eine Steuerungsvorrichtung zum Ergreifen einer Fehler-Gegenmaßnahme für ein Hybridfahrzeug-Antriebssystem. Dabei ist ein Erfassungsabschnitt vorgesehen, der eine Antriebs-Abnormalität einer Brennkraftmaschine, eines ersten Motors und eines zweiten Motors erfasst.

### Offenbarung der Erfindung

Das Verfahren zum Diagnostizieren des Fehlerstatus der Antriebsvorrichtung in dem Antriebssystem weist dagegen den Vorteil auf, dass es keine Bestimmung der tatsächlich erzeugten Momente der Antriebsvorrichtungen voraussetzt und damit kostengünstig umsetzbar ist. Auch ist kein tiefer Eingriff in bestehende Steuersysteme des Antriebssystems notwendig. Dies wird erreicht, indem Soll-Drehzahlen der Antriebsvorrichtungen auf vorbestimmte Werte eingestellt werden und aus der sich einstellenden Ist-Drehzahl der einen Antriebsvorrichtung der Fehlerstatus bestimmt wird. Es ist also das Ziel der Erfindung, den Fehlerstatus einer der Antriebsvorrichtungen in einem Antriebssystem, in welchem mehrere Antriebsvorrichtungen vorgesehen sind, zu bestimmen. Das Antriebssystem kann beispielsweise ein Hybridantriebssystem sein, welches zumindest zwei unterschiedliche Antriebsvorrichtungen aufweist, beispielsweise eine elektrische Maschine und eine Brennkraftmaschine. Die Antriebsvorrichtungen des Antriebssystems sind über mindestens eine Trennkupplung einstellbar koppelbar. Vorzugsweise sind jeweils zwei Antriebsvorrichtungen mittels einer Trennkupplung koppelbar verbunden. Beispielsweise kann das Antriebssystem ein Parallelhybrid-Antriebssystem sein, in welchem die Brennkraftmaschine über eine Trennkupplung mit der elektrischen Maschine und die elektrische Maschine über eine Anfahrkupplung mit einem Antriebsstrang des Kraftfahrzeugs verbunden ist. Dabei kann die elektrische Maschine sowohl im Motor- als auch im Generatorbetrieb betrieben sein. Das bedeutet, dass die elektrische Maschine durch die Brennkraftmaschine angetrieben sein kann und damit Strom erzeugt, welcher in einem Energiespeicher gespeichert wird. Es ist ebenfalls möglich, dass die in dem Energiespeicher gespeicherte Energie zum Betrieb der elektrischen Maschine verwendet wird, beispielsweise um einen rein elektrischen Fahrbetrieb, also bei geöffneter Trennkupplung, oder einen unterstützenden Betrieb, in dem das Moment der elektrischen Maschine das der Brennkraftmaschine ergänzt, betrieben wird. Sind die Antriebsvorrichtungen über die Trennkupplungen aneinander gekoppelt, so ist es nicht möglich festzustellen, ob eine einzelne der Antriebsvorrichtungen ein positives Moment abgibt. Es ist lediglich ein Gesamtantriebsmoment feststellbar, welches an dem Antriebsstrang des Kraftfahrzeugs anliegt und einer Beschleunigung oder einer Verzögerung des Kraftfahrzeugs dient. Dieser Umstand ist durch die Steuerung/Regelung des Antriebsystems gegeben, welche häufig keine Überwachung der einzelnen Antriebsvorrichtungen erlaubt. Es ist jedoch möglich, den Fehlerstatus einer der Antriebsvorrichtungen festzustellen, indem die Antriebsvorrichtungen auf Soll-Drehzahlen eingestellt werden und anschließend die sich einstellende Ist-Drehzahl überwacht wird. Zu diesem Zweck ist zumindest an der einen Antriebsvorrichtung und zumindest einer weiteren, mit einer Antriebsvorrichtung gekoppelten Antriebsvorrichtung eine Vorrichtung vorzusehen, welche die Bestimmung der jeweiligen Drehzahlen der Antriebsvorrichtungen erlaubt. Es soll also sowohl die Drehzahl der einen Antriebsvorrichtung als auch die Drehzahl der zumindest einen weiteren Antriebsvorrichtung bestimmt werden.

Erfindungsgemäß ist vorgesehen, dass die Trennkupplung zum Durchführen der Diagnose geöffnet wird. Alternativ zum Einstellen der Trennkupplung derart, dass zunächst kein Schleifen vorliegt und erst bei unterschiedlichen Drehzahlen der Antriebsaggregate Schleifen auftritt, kann die Trennkupplung zum Durchführen der Diagnose vollständig geöffnet werden. Vor dem Durchführen der Diagnose ist die Trennkupplung allerdings geschlossen. Das bedeutet, dass vor dem Durchführen der Diagnose die eine Antriebsvorrichtung und die weitere Antriebsvorrichtung, welche mit der einen Antriebsvorrichtung über die Trennkupplung einstellbar koppelbar ist, wirkverbunden ist, sodass beide Antriebsvorrichtungen die gleiche Drehzahl aufweisen. Dies ist auch dann der Fall, wenn die eine Antriebsvorrichtung nicht betriebsbereit sein sollte, da sie sich dann in einem Schleppbetrieb der weiteren Antriebsvorrichtung befindet und von dieser angetrieben wird. Das Durchführen der Diagnose erfolgt über das Öffnen der Trennkupplung. Weicht anschließend die Ist-Drehzahl der einen Antriebsvorrichtung von dessen Soll-Drehzahl ab, insbesondere nach unten, so kann davon ausgegangen werden, dass die Antriebsvorrichtung nicht betriebsbereit ist, sondern ein Fehler vorliegt. Dabei wird ein vorbestimmter Toleranzbereich beachtet, sodass Abweichungen der Ist-Drehzahl von der Soll-Drehzahl in dem Toleranzbereich zulässig sind. Auf diese Weise werden, da die Drehzahlen der Antriebsvorrichtungen auch in einem ordnungsgemäßen Betrieb häufig leicht schwanken, falsche Diagnoseergebnisse vermieden. Bei einem Durchführen der Diagnose durch Öffnen der Trennkupplung wird der zusätzliche Energieeintrag in diese vermieden, sodass keine Beeinträchtigung der Lebensdauer der Trennkupplung auftritt. Eine Durchführung des Verfahrens ist somit prinzipiell mit jeder Soll-Drehzahl möglich.

Alternativ ist vorgesehen, dass ein Haltemoment der Trennkupplung zum Durchführen der Diagnose so eingestellt wird, dass bei gleichen Drehzahlen kein Schleifen und bei unterschiedlichen Drehzahlen ein Schleifen der Trennkupplung auftritt. Das Zuhaltemoment der Trennkupplung wird also auf ein momentan vorliegendes Moment, welches an der Trennkupplung anliegt, konstant eingestellt. Beispielsweise kann das Zuhaltemoment aufgrund der momentan vorliegenden Drehzahl aus einem Modell oder einer Tabelle bestimmt werden. Das Einstellen der Trennkupplung erfolgt so, dass gerade kein Schleifen auftritt, beziehungsweise kein Schlupf der Trennkopplung vorliegt. Dies gilt, solange die Antriebsvorrichtungen gleiche Drehzahlen aufweisen. Liegen jedoch unterschiedliche Drehzahlen auf, so soll ein Schleifen der Trennkupplung auftreten, also Schlupf vorliegen können. Die Diagnose kann beispielsweise so erfolgen, dass zunächst die Antriebsvorrichtungen auf dieselbe Soll-Drehzahl eingestellt werden, das Haltemoment der Trennkupplung entsprechend dieser Soll-Drehzahl angepasst und anschließend den Antriebsvorrichtungen unterschiedliche Soll-Drehzahlen zugeordnet werden. Tritt bei gleichen Soll-Drehzahlen kein Schlupf auf, jedoch bei unterschiedlichen, so kann davon ausgegangen werden, dass die eine Antriebsvorrichtung fehlerfrei arbeitet. Dies gilt insbesondere, wenn die Ist-Drehzahl der Antriebsvorrichtung die Soll-Drehzahl erreicht. Es ist auf diese Weise also möglich, festzustellen, ob die eine Antriebsvorrichtung in Betrieb ist.

Eine Weiterbildung der Erfindung sieht vor, dass jeder Antriebsvorrichtung ein Drehzahlregel-/Steuersystem zugeordnet ist, an welchem die Soll-Drehzahl eingestellt wird. Jede Antriebsvorrichtung verfügt also über ein eigenes Drehzahlregel-/Steuersystem, welches die Drehzahl der Antriebsvorrichtung regelt und/oder steuert. An diesen Drehzahlregel-/Steuersystemen kann die Soll-Drehzahl eingestellt werden, worauf die Antriebsvorrichtung so geregelt und/oder gesteuert wird, dass sich eine Ist-Drehzahl einstellt, die der Soll-Drehzahl zumindest im Wesentlichen entspricht.

Eine Weiterbildung der Erfindung sieht vor, dass die Drehzahlregel-/Steuersysteme in einem Normalbetrieb von einem übergeordneten Drehzahlregel-/Steuersystem eingestellt werden oder die Antriebsvorrichtungen mittels des übergeordneten Drehzahlregel-/Steuersystems geregelt und/oder gesteuert werden. Es kann also vorgesehen sein, dass neben den Drehzahlregel-/Steuersystemen der Antriebsvorrichtungen ein übergeordnetes Drehzahlregel-/Steuersystem vorgesehen ist. Dieses kann in einem Normalbetrieb, also in einem Betrieb, in welchem keine Diagnose des Fehlerstatus durchgeführt wird, die den Antriebsvorrichtungen zugeordneten Drehzahlregel-/Steuersysteme einstellen. Auf diese Weise können beispielsweise allen Drehzahlregel-/Steuersystemen beziehungsweise Antriebsvorrichtungen dieselbe Soll-Drehzahl zugewiesen werden. Es kann jedoch auch vorgesehen sein, dass das übergeordnete Drehzahlregel-/Steuersystem in dem Normalbetrieb die Antriebsvorrichtungen direkt regelt und/oder steuert, also ohne die Drehzahlregel-/Steuersysteme der Antriebsvorrichtungen anzusprechen beziehungsweise einzustellen. Alternativ kann auch vorgesehen sein, dass die Antriebsvorrichtungen sowohl in dem Normalbetrieb als auch während des Diagnostizierens des Fehlerstatus von dem übergeordneten Drehzahlregel-/Steuersystem geregelt und/oder gesteuert werden.

Eine Weiterbildung der Erfindung sieht vor, dass die Drehzahlen der Antriebsaggregate vor dem Durchführen der Diagnose abgesenkt werden. Vor dem Durchführen der Diagnose werden die Drehzahlen der Antriebsaggregate verringert, das heißt die Soll-Drehzahlen auf einen niedrigeren Wert eingestellt. Dies vermindert den Energieeintrag in die Trennkupplung, da, wie vorstehend beschrieben, während des Diagnostizierens des Fehlerstatus zumindest kurzzeitig ein Schleifen der Trennkupplung auftreten kann. Je niedriger die Drehzahlen der Antriebsaggregate, umso geringer ist der Energieeintrag in die Trennkupplung, womit deren Lebensdauer verlängert wird. Dabei sollen vor allem die Soll-Drehzahlen der Antriebsaggregate abgesenkt werden. Es kann jedoch auch vorgesehen sein, dass die Ist-Drehzahlen der Antriebsaggregate überwacht werden, bis die Ist-Drehzahlen den (niedrigeren) Soll-Drehzahlen im Wesentlichen entsprechen. Erst anschließend wird dann die Diagnose des Fehlerstatus durchgeführt.

Eine Weiterbildung der Erfindung sieht vor, dass die Soll-Drehzahl der einen Antriebsvorrichtung gegenüber der einer weiteren Antriebsvorrichtung erhöht oder verringert wird. Dabei ist die weitere Antriebsvorrichtung mittels der Trennkupplung an die eine Antriebvorrichtung gekoppelt. Zum Durchführen der Diagnose wird die Soll-Drehzahl der einen Antriebsvorrichtung erhöht oder verringert, sodass die Soll-Drehzahl der einen Antriebsvorrichtung höher oder kleiner ist als die der weiteren Antriebsvorrichtung. Erreicht die Ist-Drehzahl der einen Antriebsvorrichtung die eingestellte Soll-Drehzahl, so kann davon ausgegangen werden, dass die eine Antriebsvorrichtung betriebsbereit ist.

Eine Weiterbildung der Erfindung sieht vor, dass als Soll-Drehzahl eine Leerlaufdrehzahl verwendet wird. Beispielsweise können die Antriebsvorrichtungen auf eine System-Leerlaufdrehzahl eingestellt werden, welche sowohl von der einen Antriebsvorrichtung als auch von der weiteren Antriebsvorrichtung ohne Einschränkungen der Funktionalität erreichbar ist. Die Drehzahlregel-/Steuersysteme können also Leerlauf-Drehzahlregel-/Steuersysteme sein, beziehungsweise das übergeordnete Drehzahlregel-/Steuersystem ein übergeordnetes Leerlauf-Drehzahlregel-/Steuersystem.

Eine Weiterbildung der Erfindung sieht vor, dass es während eines Betriebs des Antriebssystems mit mehreren Antriebsvorrichtungen durchgeführt wird. Das von dem Antriebssystem abgegebene Drehmoment soll sich also aus Drehmomenten mehrerer Antriebsvorrichtungen zusammensetzen beziehungsweise von diesen gemeinsam erzeugt werden. Das bedeutet, dass die Trennkupplungen zwischen diesen mehreren, jedoch nicht notwendigerweise allen, Antriebsvorrichtungen, geschlossen sind. Beispielsweise kann dies während eines Hybridbetriebs des Antriebssystems, welches dann als Hybridantriebssystem ausgebildet ist, durchgeführt werden. Dabei ist beispielsweise die elektrische Maschine über die Trennkupplung mit der Brennkraftmaschine gekoppelt und weiter über die Anfahrkupplung mit dem Antriebsstrang des Kraftfahrzeugs verbunden.

Eine Weiterbildung der Erfindung sieht vor, dass das Diagnostizieren nach Auftreten eines Fehlerverdachtsignals durchgeführt wird. Das Diagnostizieren des Fehlerstatus der Antriebsvorrichtung erfolgt also erst, wenn bereits ein Fehlerverdacht vorliegt, also angenommen wird, dass die eine Antriebsvorrichtung möglicherweise nicht betriebsbereit ist.

Eine Weiterbildung der Erfindung sieht vor, dass das Fehlerverdachtsignal aufgrund einer Ladebilanz eines Energiespeichers, eines Signals einer Abgassonde und/oder einer Auswertung einer Temperatur/Wärmebilanz der einen Antriebsvorrichtung auftritt. Es werden somit verschiedene Umgebungsbedingungen des Antriebssystems ausgewertet. Beispielsweise kann die Ladebilanz des Energiespeichers betrachtet werden und das Fehlerverdachtsignal ausgelöst werden, sobald trotz Ladeanforderung an die Antriebsvorrichtung, beispielsweise in Form der elektrischen Maschine, der Ladezustand absinkt. In diesem Fall kann davon ausgegangen werden, dass trotz Ladeanforderung kein Laden durchgeführt wird und somit möglicherweise die Antriebsvorrichtung nicht betriebsbereit ist. Auch das Signal der Abgassonde kann ausgewertet werden. Beispielsweise liegt dieses in Form eines Lambdasignals vor, womit das Fehlerverdachtsignal ausgelöst wird, sobald das Signal ein mageres Abgas der Brennkraftmaschine anzeigt, obwohl kein Schubabschalten oder eine Zylinderausblendung der Brennkraftmaschine vorliegt. Ebenfalls kann die Temperatur und/oder die Wärmebilanz der einen Antriebsvorrichtung ausgewertet werden. Ist die Temperatur zu gering beziehungsweise liegt kein Erwärmen der einen Antriebsvorrichtung über einen vorbestimmten Zeitraum vor, so wird das Fehlerverdachtsignal ausgelöst.

Eine Weiterbildung der Erfindung sieht vor, dass vor Durchführung der Diagnose des Fehlerstatus eine Diagnose der Trennkupplung durchgeführt wird und/oder die Trennkupplungsdiagnose während seiner Durchführung temporär abgeschaltet wird. Vor dem Diagnostizieren des Fehlerstatus der einen Antriebsvorrichtung soll somit die Trennkupplung auf ihre Funktion geprüft werden. Auf diese Weise kann sichergestellt werden, dass der Fehlerstatus der einen Antriebsvorrichtung zuverlässig bestimmt werden kann und nicht durch eine mögliche Fehlfunktion der Trennkupplung beeinflusst wird. Das bedeutet, dass vor dem Durchführen der Diagnose der einen Antriebsvorrichtung die Diagnose der Trennkupplung beziehungsweise eines Trennkupplungssystems auf jeden Fall ohne Fehler abgeschlossen sein muss. Es ist weiterhin vorteilhaft, wenn die Trennkupplungsdiagnose während der Diagnose der einen Antriebsvorrichtung temporär abgeschaltet wird. Während dieser kann eine Drehzahldifferenz an der Trennkupplung auftreten, welches von einem Trennkupplungsdiagnosesystem fälschlicherweise als Fehler gewertet werden würde. Es soll also verhindert werden, dass aufgrund der Diagnose des Fehlerstatus der Antriebsvorrichtung ein Fehler angezeigt wird, welcher die Trennkupplung betrifft.

Eine Weiterbildung der Erfindung sieht vor, dass ein Ergebnis der Diagnose einem Fahrer des Kraftfahrzeugs angezeigt wird. Wenn ein Ergebnis der Diagnose des Betriebsstaus der Antriebsvorrichtung vorliegt, so wird dieses dem Fahrer des Kraftfahrzeugs angezeigt, insbesondere wenn festgestellt wird, dass die eine Antriebsvorrichtung nicht betriebsbereit ist. Dies kann beispielsweise optisch (mittels einer Signalleuchte) oder akustisch (mittels eines Warntons) erfolgen. Auf diese Weise kann der Fahrer entsprechende Maßnahmen ergreifen, um einem Liegenbleiben des Kraftfahrzeugs vorzubeugen, beispielsweise in dem er eine Werkstatt aufsucht.

Die Erfindung betrifft weiter eine Diagnosevorrichtung zum Diagnostizieren eines Fehlerstatus einer Antriebsvorrichtung, insbesondere zur Durchführung des Verfahrens gemäß den vorstehenden Ausführungen, in einem Antriebssystem, insbesondere eines Kraftfahrzeugs, wobei das Antriebssystem zumindest zwei Antriebsvorrichtungen, insbesondere eine elektrische Maschine und eine Brennkraftmaschine, und mindestens eine die Antriebsvorrichtungen einstellbar koppelnde Trennkupplung aufweist. Dabei ist vorgesehen, dass die Soll-Drehzahlen der Antriebsvorrichtungen auf vorbestimmte Werte einstellbar sind und aus der sich einstellenden Ist-Drehzahl der einen Antriebsvorrichtung der Fehlerstatus bestimmbar ist. Die Diagnosevorrichtung kann gemäß den vorstehenden Ausführungen weitergebildet sein.

Die Erfindung betrifft ferner ein Antriebssystem, insbesondere eines Kraftfahrzeugs, und insbesondere mit einer Diagnosevorrichtung und/oder zur Durchführung des Verfahrens gemäß den vorstehenden Ausführungen, mit zumindest zwei Antriebsvorrichtungen, insbesondere einer elektrischen Maschine und einer Brennkraftmaschine, und mindestens einer die Antriebsvorrichtungen einstellbar koppelnden Trennkupplung. Dabei ist vorgesehen, dass die Soll-Drehzahlen der Antriebsvorrichtungen auf vorbestimmte Werte einstellbar sind und aus der sich einstellenden Ist-Drehzahl der einen Antriebsvorrichtung der Fehlerstatus bestimmbar ist.

### Kurze Beschreibung der Zeichnungen

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: eine schematische Darstellung eines Kraftfahrzeugs mit einem Hybridantriebssystem,
- Figur 2: ein Ablaufdiagramm des Verfahrens zum Diagnostizieren eines Fehlerstatus einer Antriebsvorrichtung des Hybridantriebssystems,
- Figur 3a: einen Drehzahlverlauf einer Brennkraftmaschine und einer elektrischen Maschine während einer Durchführung des Verfahrens, wobei kein Fehler der Brennkraftmaschine vorliegt,
- Figur 3b: das Drehzahldiagramm aus Figur 3a, wobei ein Fehler der Brennkraftmaschine vorliegt,
- Figur 4a: der Drehzahlverlauf der Brennkraftmaschine und der elektrischen Maschine während der Durchführung einer zweiten Variante des Verfahrens, wobei die Brennkraftmaschine betriebsbereit ist, und
- Figur 4b: das Drehzahldiagramm aus Figur 4a, wobei wiederum ein Fehler der Brennkraftmaschine vorliegt.

### Ausführungsform(en) der Erfindung

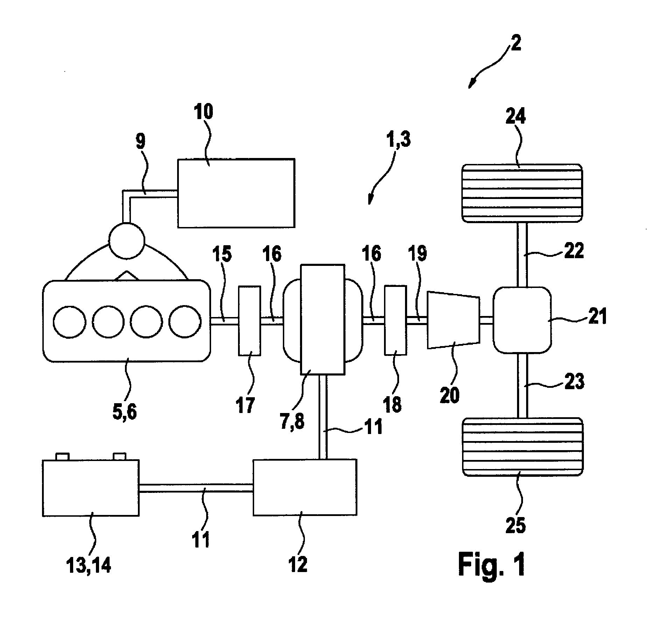

Die Figur 1 zeigt eine Antriebsvorrichtung 1 eines schematisch dargestellten Kraftfahrzeugs 2. Die Antriebsvorrichtung 1 ist als Hybridantriebsvorrichtung 3 ausgebildet. Diese weist zwei Antriebsvorrichtungen 4 auf, nämlich eine erste Antriebsvorrichtung 5 in Form einer Brennkraftmaschine 6 sowie eine zweite Antriebsvorrichtung 7 in Form einer elektrischen Maschine 8. Die Brennkraftmaschine 6 weist eine Verbindung 9 zu einer Kraftstoffversorgungseinrichtung 10 auf. Die Brennkraftmaschine 6 kann also mit Kraftstoff aus der Kraftstoffversorgungseinrichtung 10 betrieben werden. Die elektrische Maschine 8 ist über Anschlussleitungen 11 und einen Inverter 12 mit einem Energiespeicher 13 verbunden. Dieser liegt in Form einer Hochvoltbatterie 14 vor. Die Brennkraftmaschine 6 und die elektrische Maschine 8 sind über Wellen 15 und 16 und eine Trennkupplung 17 einstellbar miteinander koppelbar. Bei geschlossener Trennkupplung 17 liegt also eine Verbindung zwischen Brennkraftmaschine 6 und elektrischer Maschine 8 vor, während bei geöffneter Trennkupplung 17 die beiden Antriebsvorrichtungen 5 und 7 voneinander getrennt sind. An die Welle 16 der elektrischen Maschine 8 ist außerdem eine Anfahrkupplung 18 angeschlossen, über welche eine Verbindung zu einer weiteren Welle 19 und damit zu einem Getriebe 20 hergestellt ist. In dem Getriebe 20 erfolgt entsprechend einer von einem Fahrer des Kraftfahrzeugs 2 gewünschten Übersetzung eine Umsetzung der Drehzahl beziehungsweise des Drehmoments, welches von Brennkraftmaschine 6 und/oder elektrischer Maschine 8 erzeugt wird. Eine Abtriebsseite des Getriebes 20 ist mit einem Differential 21 wirkverbunden, über welches Wellen 22 und 23 damit Räder 24 und 25 antreibbar sind. Weiterhin ist ein elektronisches Steuergerät (nicht dargestellt) vorgesehen, mit welchem zumindest die Brennkraftmaschine 6 und die elektrische Maschine 8 entsprechend dem erfindungsgemäßen Verfahren zum Diagnostizieren eines Fehlerstatus der Brennkraftmaschine 6 angesteuert werden können.

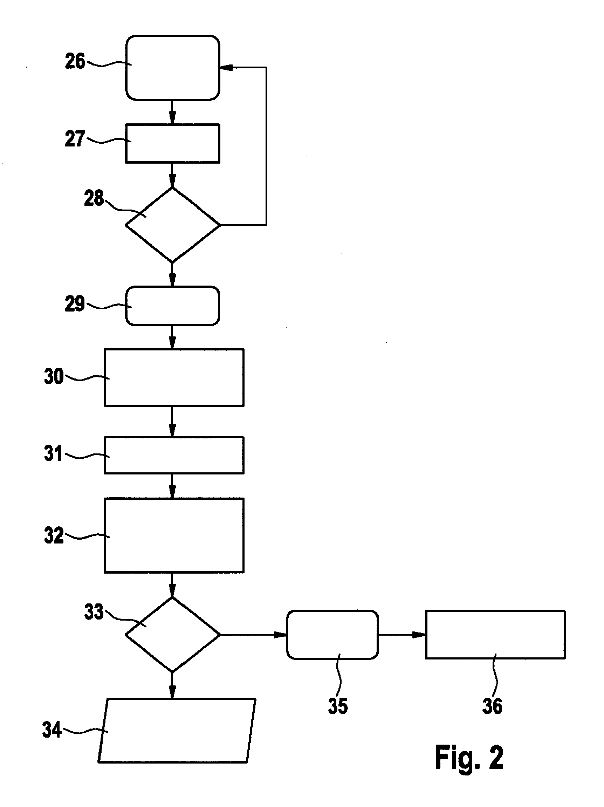

Die Figur 2 zeigt ein Ablaufdiagramm des Verfahrens zum Diagnostizieren eines Fehlerstatus der einen Antriebsvorrichtung (Brennkraftmaschine 6). An einem Startpunkt 26 werden zunächst Umgebungsbedingungen ausgewertet, um einen eventuellen Ausfall der einen Antriebsvorrichtung festzustellen und in diesem Fall ein Fehlerverdachtsignal auszulösen. Die Überwachung der Umgebungsbedingungen erfolgt während der Operation 27, wobei beispielsweise eine Ladebilanz des Energiespeichers 13, ein Signals einer Abgassonde (beispielsweise einer Lambdasonde) und/oder eine Temperatur und/oder Wärmebilanz der Brennkraftmaschine 6 ausgewertet werden.

Liegt eine negative Ladungsbilanz des Energiespeichers 13 vor, obwohl das Steuergerät ein Aufladen vorgibt oder zeigt das Signal der Lambdasonde ein zu mageres Abgas an, obwohl kein Schubabschalten oder eine Zylinderausblendung der Brennkraftmaschine 6 vorliegt oder ergibt die Auswertung der Temperatur/Wärmebilanz der Brennkraftmaschine 6, dass die Erwärmung zu gering ist (ein Wärmeeintrag in einen Kühlwasserkreislauf erfolgt lediglich durch die Brennkraftmaschine 6), so wird das Fehlerverdachtsignal gesetzt. Liegt das Fehlersignal nicht vor, so wird an einer Verzweigung 28 zurück an den Startpunkt 26 gesprungen. Anderenfalls wird in ein Unterprogramm 29 verzweigt, in welchem die Diagnose des Fehlerstatus der Brennkraftmaschine 6 durchgeführt wird. Zunächst wird die Operation 30 durchgeführt, wobei der Betriebsmodus "hybridischer Leerlauf' angefordert wird. Das bedeutet, dass die Anfahrkupplung 18 geöffnet und die Trennkupplung 17 geschlossen wird. Es liegt also eine Wirkverbindung zwischen der Brennkraftmaschine 6 und der elektrischen Maschine 8 vor, jedoch wird das Kraftfahrzeug 2 nicht mehr von dem Antriebssystem 1 angetrieben. Anschließend werden der Brennkraftmaschine 6 und der elektrischen Maschine 8 eine System-Leerlaufdrehzahl als Soll-Drehzahl vorgegeben. Die System-Leerlaufdrehzahl kann etwa 700 Umdrehungen pro Minute betragen. Sowohl die Brennkraftmaschine 6 als auch die elektrische Maschine 8 weisen also dieselbe Drehzahl, nämlich die System-Leerlaufdrehzahl, auf. An der elektrischen Maschine 8 wird außerdem eine neutrale Ladestrategie eingestellt. Anschließend werden die Soll-Drehzahlen der Brennkraftmaschine 6 und der elektrischen Maschine 8, ausgehend von der System-Leerlaufdrehzahl, abermals abgesenkt, beispielsweise um etwa 100 bis 200 Umdrehungen pro Minute. Anschließend wird ein Haltemoment der Trennkupplung 17 so eingestellt, dass kein Schleifen, also kein Schlupf, vorliegt, jedoch bei ungleichen Soll-Drehzahlen Schleifen der Trennkupplung 17 auftreten kann. Anschließend wird im Rahmen einer Operation 31 die Soll-Drehzahl der elektrischen Maschine 8 konstant gehalten und die der Brennkraftmaschine 6 erhöht, beispielsweise auf etwa 1000 Umdrehungen pro Minute. In einer nachfolgenden Operation 32 wird eine Bewertung durchgeführt. Zunächst wird eine Abweichung eines P-Anteils der Brennkraftmaschine 6 ausgeregelt, womit eine Drosselklappe der Brennkraftmaschine 6 geöffnet wird, um die Ist-Drehzahl der Brennkraftmaschine 6 an die eingestellte Soll-Drehzahl anzupassen. Die Ist-Drehzahl der Brennkraftmaschine 6 übersteigt also die Ist-Drehzahl der elektrischen Maschine 8. Damit tritt Schleifen der Trennkupplung 17 auf. Kann die Brennkraftmaschine 6 die höhere Soll-Drehzahl zumindest im Wesentlichen erreichen (es wird dabei ein vorbestimmter Toleranzbereich zugelassen), so kann davon ausgegangen werden, dass die Brennkraftmaschine 6 betriebsbereit ist. Dies wird in einer Verzweigung 33 bewertet. Ergibt die Bewertung während der Operation 32, dass die Brennkraftmaschine 6 betriebsbereit ist, also ein positives Drehmoment liefert, so wird an ein Programmende 34 verzweigt. Damit ist die Diagnose des Fehlerstatus der Antriebsvorrichtung 5 beendet und es kann wieder an den Startpunkt 26 gesprungen werden. Ist die Brennkraftmaschine 6 dagegen nicht betriebsbereit, so wird an der Verzweigung 33 zu einem Unterprogramm 35 verzweigt, welches ein Fehlersignal auslöst. Nachfolgend wird im Rahmen einer Operation 36 ein Fahrer des Kraftfahrzeugs 2 über den Fehlerstatus der Antriebsvorrichtung 5 informiert, sodass dieser notwendige Maßnahmen ergreifen kann, beispielsweise eine Werkstatt aufsuchen. Des Weiteren wird die Trennkupplung 17 vollständig geöffnet, sodass das Kraftfahrzeug 2 lediglich mit der elektrischen Maschine 8 fortbewegt wird. Auf diese Weise wird eine unnötige Belastung der elektrischen Maschine 8 durch die nicht funktionsfähige Brennkraftmaschine 6 vermieden. Ebenso können Notlauf-/Ersatzrnaßnahmen eingeleitet werden. Beispielsweise kann eine maximale Geschwindigkeit des Kraftfahrzeugs 2 begrenzt werden, sodass eine maximale Reichweite sichergestellt ist.

In einer alternativen Ausgestaltung des Ausführungsbeispiels werden während der Operation 30 die Soll-Drehzahlen der Antriebsvorrichtungen 4 auf die System-Leerlaufdrehzahl eingestellt, eine neutrale Ladestrategie an der elektrischen Maschine 8 gewählt und nachfolgend eine weitere Absenkung der Soll-Drehzahlen, beispielsweise um 200 Umdrehungen pro Minute, durchgeführt. Anschließend wird die Trennkupplung 17 vollständig geöffnet. Während der nachfolgenden Operation 31 werden die Soll-Drehzahlen der Antriebsvorrichtungen 4 konstant auf beispielsweise 700 Umdrehungen pro Minute gehalten. Ist die Brennkraftmaschine 6 betriebsbereit, so wird ihre Ist-Drehzahl der Soll-Drehzahl in einem gewissen Toleranzbereich entsprechen. Ist dies nicht der Fall, weicht die Ist-Drehzahl von der Soll-Drehzahl ab. Dies wird während der Operation 32 bewertet. Dabei wird jedoch der vorgegebene Toleranzbereich berücksichtigt. Das bedeutet, dass Abweichungen in einem vergleichsweise geringen Bereich zulässig sind. Ist die Brennkraftmaschine 6 nicht betriebsbereit, so wird nach dem Öffnen der Trennkupplung 17 die Ist-Drehzahl der Brennkraftmaschine 6 abfallen, da kein oder ein zu geringes Drehmoment von dieser erzeugt wird. Wird dies während der Operation 32 festgestellt, so wird in der Verzweigung 33 in das Unterprogramm 35 verzweigt. Anderenfalls wird an das Programmende 34 gesprungen. Hinsichtlich der weiteren Verfahrensweise wird auf das bezüglich der voranstehend erläuterten Ausgestaltung des Ausführungsbeispiels Gesagte verwiesen.

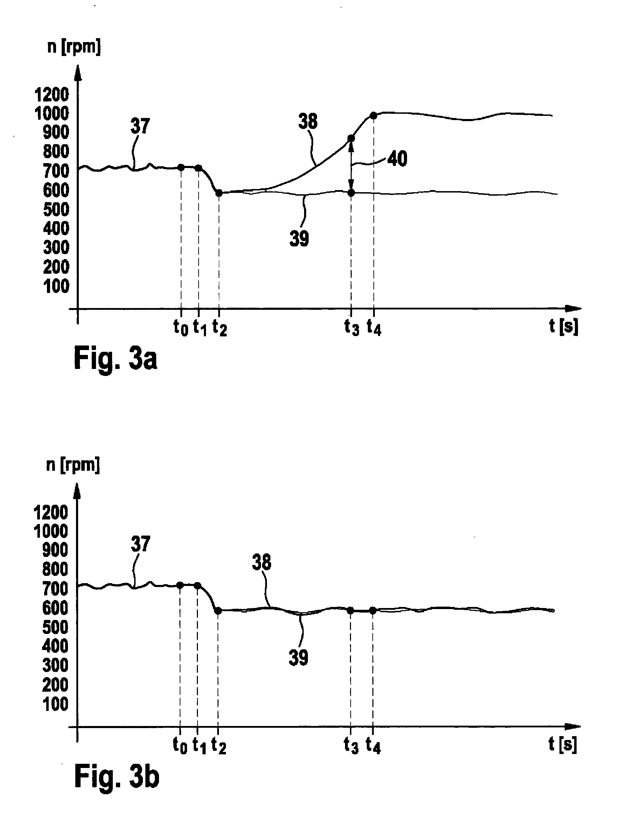

Die Figur 3a zeigt einen Drehzahlverlauf der Brennkraftmaschine 6 und der elektrischen Maschine 8. Dabei ist auf der Abszisse die Zeit t in der Einheit Sekunden aufgetragen, während die Ordinate die Drehzahl n in der Einheit Umdrehungen pro Minute darstellt. Vor einem Zeitpunkt t₀ befindet sich das Antriebssystem 1 in einem Normalbetrieb. Dabei ist die elektrische Maschine 6 mit der Brennkraftmaschine 8 über die Trennkupplung 17 gekoppelt und gleichzeitig die Anfahrkupplung 18 geschlossen, sodass das Kraftfahrzeug 2 mittels des Antriebssystems 1 angetrieben wird. Ein Gesamtantriebsmoment wird also von der Brennkraftmaschine 6 und der elektrischen Maschine 8 im Wesentlichen gemeinsam erzeugt. Vor dem Zeitpunkt t₀ werden die Soll-Drehzahlen der Brennkraftmaschine 6 und der elektrischen Maschine 8 von einem (nicht dargestellten) übergeordneten Drehzahlregel-/Steuersystem geregelt und/oder gesteuert. Das bedeutet, dass beide Antriebsvorrichtungen 4 auf dieselbe Soll-Drehzahl geregelt und/oder gesteuert werden. An dem Zeitpunkt t₀ tritt das Fehlerverdachtsignal auf. Das bedeutet, dass die Auswertung der Umgebungsbedingungen des Antriebssystems 1 ergeben hat, dass die Brennkraftmaschine 6 möglicherweise nicht betriebsbereit ist. In Folge dessen werden ab dem Zeitpunkt t₁ die Soll-Drehzahlen der Brennkraftmaschine 6 und der elektrischen Maschine 8 abgesenkt, beispielsweise um etwa 150 Umdrehungen pro Minute unter die System-Leerlaufdrehzahl. Diese Absenkung ist bis zum Zeitpunkt t₂ abgeschlossen. Bis zum Zeitpunkt t₂ weisen die Soll-Drehzahlen der Brennkraftmaschine 6 und der elektrischen Maschine 8 im Wesentlichen den gleichen Verlauf 37 auf. Ab dem Zeitpunkt t₂ werden die Brennkraftmaschine 6 und die elektrische Maschine 8 jeweils von einem eigenen Drehzahlregel-/Steuersystem geregelt und/oder gesteuert. Das bedeutet, dass die Soll-Drehzahl der beiden Antriebsvorrichtungen 4 getrennt einstellbar ist. In dem Zeitpunkt t₂ wird die Trennkupplung 17, beispielsweise basierend auf der momentan vorliegenden Soll-Drehzahl, so eingestellt, dass bei gleichen Drehzahlen kein Schleifen und bei unterschiedlichen Drehzahlen ein Schleifen der Trennkupplung 17 auftritt.

In oder nachfolgend dem Zeitpunkt t₂ wird die Soll-Drehzahl der Brennkraftmaschine 6 erhöht, beispielsweise auf 1000 Umdrehungen pro Minute. Das Drehzahlregel-/Steuersystem der Brennkraftmaschine 6 wird nun versuchen, die Ist-Drehzahl der Brennkraftmaschine 6 auf die eingestellte Soll-Drehzahl einzustellen. Dabei wird beispielsweise die Drosselklappe der Brennkraftmaschine 6 geöffnet, um ein positives Drehmoment zu erzeugen. Durch das ansteigende Drehmoment der Brennkraftmaschine 6 gegenüber der elektrischen Maschine 8 baut sich an der Trennkupplung 17 eine Drehzahldifferenz auf. Die Trennkupplung 17 beginnt zu schleifen, es liegt also Schlupf vor. Nachfolgend dem Zeitpunkt t₂ steigt die Drehzahl der Brennkraftmaschine 6 gemäß einem Verlauf 38 an, während die Ist-Drehzahl der elektrischen Maschine 8 einem Verlauf 39 folgt und im Wesentlichen konstant bleibt. Beispielsweise zwischen dem Zeitpunkt t₂ und einem weiteren Zeitpunkt t₃ wird die Bewertung gemäß der Operation 32 durchgeführt, das heißt es wird geprüft, ob eine Drehzahldifferenz zwischen Ist-Drehzahlen der Brennkraftmaschine 6 und der elektrischen Maschine 8 auftritt. Diese ist für den Zeitpunkt t₃ beispielhaft durch einen Pfeil 40 dargestellt. An einem Zeitpunkt t₄ erreicht die Brennkraftmaschine 6 beziehungsweise der Drehzahlverlauf 38 die Soll-Drehzahl, welche für die Brennkraftmaschine 6 eingestellt wurde. Spätestens zu diesem Zeitpunkt kann die Diagnose des Fehlerstatus der Brennkraftmaschine 6 abgebrochen werden, da nun bekannt ist, dass eine Drehzahldifferenz (siehe Pfeil 40) vorliegt und die Brennkraftmaschine 6 damit betriebsbereit ist. Es ist vorteilhaft, ein Diagnosezeitfenster, welches beispielsweise zwischen t₂ und t₄ vorliegt, möglichst kurz zu halten, um einen Energieeintrag in die Trennkupplung 17 so gering als möglich zu halten. Nachfolgend dem Zeitpunkt t₄ kann das Antriebssystem 1 wieder in einen Normalbetrieb wechseln, also beispielsweise die Soll-Drehzahlen der Brennkraftmaschine 6 und der elektrischen Maschine 8 wieder aneinander angleichen und die Trennkupplung 17 vollständig schließen. Dies ist in Figur 3a jedoch nicht dargestellt.

Die Figur 3b zeigt die Drehzahlverläufe 37, 38 und 39 der Brennkraftmaschine 6 und der elektrischen Maschine 8 für den Fall, dass die Brennkraftmaschine 6 nicht betriebsbereit ist. Wiederum tritt an dem Zeitpunkt t₀ das Fehlerverdachtsignal auf, worauf zwischen den Zeitpunkten t₁ und t₂ die Soll-Drehzahlen der Brennkraftmaschine 6 und der elektrischen Maschine 8 abgesenkt werden. Nachfolgend wird die Soll-Drehzahl der Brennkraftmaschine 6 auf einen höheren Wert eingestellt. Wie der Figur 3b entnommen werden kann, ergeben sich jedoch keine Drehzahlunterschiede zwischen den Verläufen 38 und 39. Daraus kann entnommen werden, dass die Brennkraftmaschine 6 nicht betriebsbereit ist. Spätestens bei Erreichen des Zeitpunkts t₄ wird daher die Diagnose abgebrochen und in das Unterprogramm 35, also die Fehlerbehandlung, verzweigt.

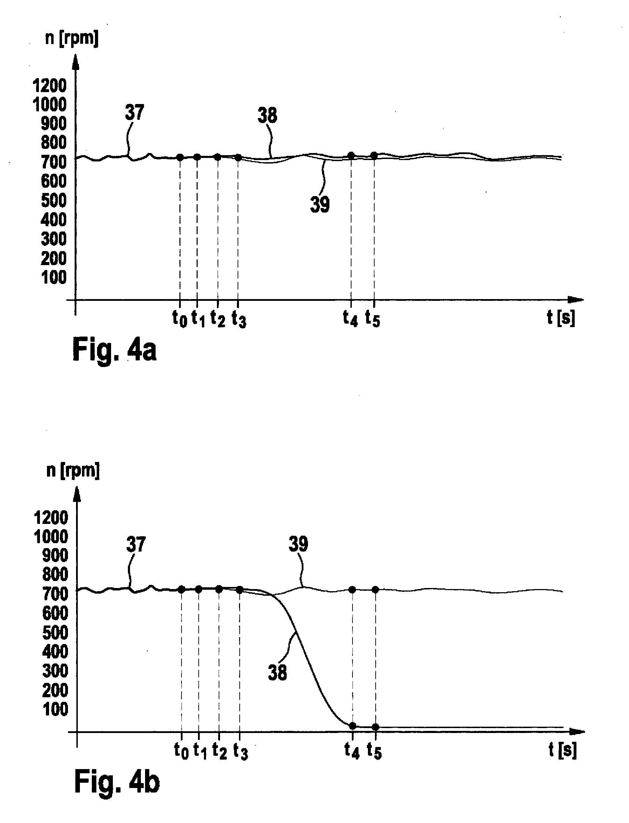

Die Figur 4a zeigt eine weitere Ausgestaltung des Ausführungsbeispiels, bei dem die Trennkupplung 17 zur Durchführung der Diagnose vollständig geöffnet wird. Auch hier tritt zu dem Zeitpunkt t₀ das Fehlerverdachtsignal auf, womit die Diagnose des Fehlerstatus der Brennkraftmaschine 6 eingeleitet wird. Die Soll-Drehzahlen der Brennkraftmaschine 6 und der elektrischen Maschine 8 werden auf die System-Leerlaufdrehzahl, beispielsweise 700 Umdrehungen pro Minute, eingestellt. Auch hier erfolgt ein Umschalten von dem übergeordneten Drehzahlregel-/Steuersystem auf die den Antriebsvorrichtungen 4 zugeordneten Drehzahlregel-/Steuersysteme. Beispielsweise erreicht die elektrische Maschine 8 die Soll-Drehzahl zum Zeitpunkt t₁, während die Brennkraftmaschine 6 die Soll-Drehzahl zum Zeitpunkt t₂ erreicht. Zum Zeitpunkt t₃ wird die Trennkupplung 17 zum Durchführen der Diagnose geöffnet. Zwischen den Zeitpunkten t₃ und t₄, also in dem Diagnosezeitraum, wird eine Bewertung der Drehzahlverläufe 38 und 39 durchgeführt. Ist die Brennkraftmaschine 6 betriebsbereit, ergibt sich keine Drehzahldifferenz zwischen der Brennkraftmaschine 6 und der elektrischen Maschine 8, da die Soll-Drehzahlen übereinstimmen und die Ist-Drehzahlen entsprechend eingeregelt werden. Wird also zwischen t₃ und t₄ festgestellt, dass die Ist-Drehzahlen der Brennkraftmaschine 6 und der elektrischen Maschine 8 im Wesentlichen übereinstimmen, so wird angenommen, dass die Brennkraftmaschine 6 betriebsbereit ist. Zu einem Zeitpunkt t₅ wird die Diagnose beendet.

Die Figur 4b zeigt die Drehzahlverläufe 37, 38 und 39 für den Fall, dass die Brennkraftmaschine 6 nicht betriebsbereit ist. Der zeitliche Ablauf entspricht dem anhand der Figur 4a beschriebenen. Ab dem Öffnen der Trennkupplung 17 zum Zeitpunkt t₃ unterscheiden sich die Drehzahlverläufe 38 und 39 im Unterschied zu dem in der Figur 4a dargestellten Beispiel voneinander, da die Brennkraftmaschine 6 nicht betriebsbereit ist und daher die Soll-Drehzahl nicht einhalten kann. Im Gegenteil fällt die Ist-Drehzahl entsprechend dem Drehzahlverlauf 38 ab. Dies wird wiederum während des Diagnosefensters zwischen den Zeitpunkten t₃ und t₄ festgestellt. Zum Zeitpunkt t₅ kann damit die Diagnose beendet werden mit dem Ergebnis, dass die Brennkraftmaschine 6 nicht betriebsbereit ist. Im Anschluss können somit geeignete Maßnahmen ergriffen werden, beispielsweise die Information des Fahrers und/oder ein Umschalten auf einen Notlaufbetrieb.

## Patentansprüche

1. Verfahren zum Diagnostizieren eines Fehlerstatus einer Antriebsvorrichtung (5,7) in einem Antriebssystem (1), insbesondere eines Kraftfahrzeugs (2), mit zumindest zwei Antriebsvorrichtungen (4), insbesondere einer elektrischen Maschine (8) und einer Brennkraftmaschine (6), und mindestens einer die Antriebsvorrichtungen (4) einstellbar koppelnden Trennkupplung (17), wobei Soll-Drehzahlen der Antriebsvorrichtungen (4) auf vorbestimmte Werte eingestellt werden und aus der sich einstellenden Ist-Drehzahl der einen Antriebsvorrichtung (5,7) der Fehlerstatus bestimmt wird, **dadurch gekennzeichnet, dass** zum Durchführen der Diagnose die Trennkupplung (17) geöffnet oder ein Haltemoment der Trennkupplung (17) so eingestellt wird, dass bei gleichen Drehzahlen kein Schleifen und bei unterschiedlichen Drehzahlen ein Schleifen der Trennkupplung (17) auftritt.

2. Verfahren nach Anspruch 1, **dadurch gekennzeichnet, dass** jeder Antriebsvorrichtung (5,7) ein Drehzahlregel-/Steuersystem zugeordnet ist, an welchem die Soll-Drehzahl eingestellt wird.

3. Verfahren nach Anspruch 2, **dadurch gekennzeichnet, dass** die Drehzahlregel-/Steuersysteme in einem Normalbetrieb von einem übergeordneten Drehzahlregel-/Steuersystem eingestellt werden oder die Antriebsvorrichtungen (4) mittels des übergeordneten Drehzahlregel-/Steuersystems geregelt und/oder gesteuert werden.

4. Verfahren nach einem der vorhergehenden Ansprüche, **dadurch gekennzeichnet, dass** die Drehzahlen der Antriebsvorrichtungen (4) vor dem Durchführen der Diagnose abgesenkt werden.

5. Verfahren nach einem der vorhergehenden Ansprüche, **dadurch gekennzeichnet, dass** die Soll-Drehzahl der einen Antriebsvorrichtung (5,7) gegenüber einer weiteren Antriebsvorrichtung (7,5) erhöht oder verringert wird.

6. Verfahren nach einem der vorhergehenden Ansprüche, **dadurch gekennzeichnet, dass** als Soll-Drehzahl eine Leerlaufdrehzahl verwendet wird.

7. Verfahren nach einem der vorhergehenden Ansprüche, **dadurch gekennzeichnet, dass** das Diagnostizieren während eines Betriebs des Antriebssystems (1) mit mehreren Antriebsvorrichtungen (4) durchgeführt wird.

8. Verfahren nach einem der vorhergehenden Ansprüche, **dadurch gekennzeichnet, dass** das Diagnositzieren nach Auftreten eines Fehlerverdachtsignals durchgeführt wird.

9. Verfahren nach Anspruch 8, **dadurch gekennzeichnet, dass** das Fehlerverdachtsignal aufgrund einer Ladebilanz eines Energiespeichers (13), eines Signals einer Abgassonde und/oder einer Auswertung einer Temperatur/Wärmebilanz der einen Antriebsvorrichtung (5,7) auftritt.

10. Verfahren nach einem der vorhergehenden Ansprüche, **dadurch gekennzeichnet, dass** vor seiner Durchführung eine Diagnose der Trennkupplung (17) durchgeführt wird und/oder die Trennkupplungsdiagnose (17) während seiner Durchführung temporär abgeschaltet wird.

11. Verfahren nach einem der vorhergehenden Ansprüche, **dadurch gekennzeichnet, dass** ein Ergebnis der Diagnose einem Fahrer des Kraftfahrzeugs (2) angezeigt wird.

12. Diagnosevorrichtung in einem Antriebssystem (1), die das Verfahren gemäß einem der vorhergehenden Ansprüche durchführt, wobei das Antriebssystem (1) zumindest zwei Antriebsvorrichtungen (4), insbesondere eine elektrische Maschine (8) und eine Brennkraftmaschine (6), und mindestens eine die Antriebsvorrichtungen (4) einstellbar koppelnde Trennkupplung (17) aufweist, **dadurch gekennzeichnet, dass** die Soll-Drehzahlen der Antriebsvorrichtungen (4) auf vorbestimmte Werte einstellbar sind und aus der sich einstellenden Ist-Drehzahl der einen Antriebsvorrichtung (5,7) ein Fehlerstatus bestimmbar ist.

13. Antriebssystem (1) mit einer Diagnosevorrichtung nach Anspruch 12 und/oder das das Verfahren nach einem oder mehreren der Ansprüche 1 bis 11 durchführt, mit zumindest zwei Antriebsvorrichtungen (4), insbesondere einer elektrischen Maschine (8) und einer Brennkraftmaschine (6), und mindestens einer die Antriebsvorrichtungen (4) einstellbar koppelnden Trennkupplung (17), **dadurch gekennzeichnet, dass** die Soll-Drehzahlen der Antriebsvorrichtungen (4) auf vorbestimmte Werte einstellbar sind und aus der sich einstellenden Ist-Drehzahl der einen Antriebsvorrichtung (5,7) ein Fehlerstatus bestimmbar ist.

## Claims

1. Method for diagnosing a fault status of a drive device (5, 7) in a drive system (1), in particular of a motor vehicle (2), having at least two drive devices (4), in particular an electric machine (8) and an internal combustion engine (6), and at least one clutch (17) which adjustably couples the drive devices (4), wherein setpoint rotational speeds of the drive devices (4) are set to predetermined values and the fault status is determined from the actual rotational speed which is set at the one drive device (5, 7), **characterized in that** in order to carry out the diagnosis, the clutch (17) is opened or a holding torque of the clutch (17) is set in such a way that slipping does not occur at identical rotational speeds and slipping of the clutch (17) occurs at different rotational speeds.

2. Method according to Claim 1, **characterized in that** each drive device (5, 7) is assigned a rotational speed closed-loop/open-loop control system at which the setpoint rotational speed is set.

3. Method according to Claim 2, **characterized in that** the rotational speed closed-loop/open-loop control systems are set during normal operation by a superordinate rotational speed closed-loop/open-loop control system or closed-loop and/or open-loop control of the drive devices (4) is carried out by means of the superordinate rotational speed closed-loop/open-loop control system.

4. Method according to one of the preceding claims, **characterized in that** the rotational speeds of the drive devices (4) are reduced before the diagnosis is carried out.

5. Method according to one of the preceding claims, **characterized in that** the setpoint rotational speed of the one drive device (5, 7) is increased or decreased compared to a further drive device (7, 5).

6. Method according to one of the preceding claims, **characterized in that** an idling rotational speed is used as a setpoint rotational speed.

7. Method according to one of the preceding claims, **characterized in that** the diagnosis is carried out while the drive system (1) is operating with a plurality of drive devices (4).

8. Method according to one of the preceding claims, **characterized in that** the diagnosis is carried out after a suspected fault signal occurs.

9. Method according to Claim 8, **characterized in that** the suspected fault signal occurs as a result of a charge balance of an energy accumulator (13), a signal of an exhaust gas probe and/or evaluation of a temperature/heat balance of the one drive device (5, 7).

10. Method according to one of the preceding claims, **characterized in that** before the method is carried out the clutch (17) is diagnosed and/or the clutch diagnosis (17) is temporarily switched off while said method is carried out.

11. Method according to one of the preceding claims, **characterized in that** a result of the diagnosis is displayed to a drive of the motor vehicle (2).

12. Diagnostic device in a drive system (1) which carries out the method according to one of the preceding claims, wherein the drive system (1) has at least two drive devices (4), in particular an electric machine (8) and an internal combustion engine (6), and at least one clutch (17) which adjustably couples the drive devices (4), **characterized in that** the setpoint rotational speeds of the drive devices (4) can be set to predetermined values, and a fault status can be determined from the actual rotational speed which is set at the one drive device (5, 7).

13. Drive system (1) having a diagnostic device according to Claim 12 and/or which carries out the method according to one or more of Claims 1 to 11, having at least two drive devices (4), in particular an electric machine (8) and an internal combustion engine (6), and at least one clutch (17) which adjustably couples the drive devices (4), **characterized in that** the setpoint rotational speeds of the drive devices (4) can be set to predetermined values, and a fault status can be determined from the actual rotational speed which is set at the one drive device (5, 7).

## Revendications

1. Procédé de diagnostic d'un état de défaillance d'un dispositif d'entraînement (5, 7) dans un système d'entraînement (1), notamment d'un véhicule automobile (2), avec au moins deux dispositifs d'entraînement (4), notamment un moteur électrique (8) et un moteur à combustion interne (6), et au moins un embrayage de coupure (17) couplant les dispositifs d'entraînement (4) de façon réglable, les vitesses de rotation théoriques des dispositifs d'entraînement (4) étant réglées à des valeurs prédéfinies et l'état de défaillance étant défini à partir de la vitesse de rotation réelle en train d'être réglée du dispositif d'entraînement (5, 7) respectif, **caractérisé en ce que** pour réaliser le diagnostic, l'embrayage de coupure (17) est ouvert ou qu'un couple de blocage de l'embrayage de coupure (17) est réglé de telle sorte qu'aucun patinage ne survienne pour des vitesses de rotation identiques et qu'un patinage de l'embrayage de coupure (17) se produise en présence de vitesses de rotation différentes.

2. Procédé selon la revendication 1, **caractérisé en ce qu'**un système de réglage/commande de la vitesse de rotation permettant de régler la vitesse de rotation théorique est associé à chaque dispositif d'entraînement (5, 7).

3. Procédé selon la revendication 2, **caractérisé en ce que** les systèmes de réglage/commande de la vitesse de rotation sont réglés dans un mode de fonctionnement normal par un système de réglage/commande de la vitesse de rotation maître ou que les dispositifs d'entraînement (4) sont réglés et/ou commandés à l'aide du système de réglage/commande de la vitesse de rotation maître.

4. Procédé selon l'une quelconque des revendications précédentes, **caractérisé en ce que** les vitesses de rotation des dispositifs d'entraînement (4) sont abaissées avant la réalisation du diagnostic.

5. Procédé selon l'une quelconque des revendications précédentes, **caractérisé en ce que** la vitesse de rotation théorique du dispositif d'entraînement (5, 7) respectif est augmentée ou réduite par rapport à un autre dispositif d'entraînement (7, 5).

6. Procédé selon l'une quelconque des revendications précédentes, **caractérisé en ce que** la vitesse de rotation théorique utilisée est une vitesse de rotation à vide.

7. Procédé selon l'une quelconque des revendications précédentes, **caractérisé en ce que** le diagnostic est réalisé à l'aide de plusieurs dispositifs d'entraînement (4) pendant une période de fonctionnement du système d'entraînement (1).

8. Procédé selon l'une quelconque des revendications précédentes, **caractérisé en ce que** le diagnostic est réalisé après la réception d'un signal de soupçon de défaillance.

9. Procédé selon la revendication 8, **caractérisé en ce que** le signal de soupçon de défaillance est envoyé sur la base d'un bilan de charge d'un accumulateur d'énergie (13), d'un signal d'une sonde de gaz d'échappement et/ou d'une analyse d'un bilan de température/chaleur du dispositif d'entraînement (5, 7) respectif.

10. Procédé selon l'une quelconque des revendications précédentes, **caractérisé en ce qu'**un diagnostic de l'embrayage de coupure (17) est réalisé avant la mise en oeuvre dudit procédé et/ou que le diagnostic de l'embrayage de coupure (17) est désactivé temporairement pendant la mise en oeuvre dudit procédé.

11. Procédé selon l'une quelconque des revendications précédentes, **caractérisé en ce qu'**un résultat du diagnostic est affiché au conducteur du véhicule automobile (2).

12. Dispositif de diagnostic placé dans un système d'entraînement (1) et mettant en oeuvre le procédé selon l'une quelconque des revendications précédentes, le système d'entraînement (1) comprenant au moins deux dispositifs d'entraînement (4), notamment un moteur électrique (8) et un moteur à combustion interne (6), et au moins un embrayage de coupure (17) couplant les dispositifs d'entraînement (4) de façon réglable, **caractérisé en ce que** les vitesses de rotation théoriques des dispositifs d'entraînement (4) peuvent être réglées à des valeurs prédéfinies et qu'un état de défaillance peut être défini à partir de la vitesse de rotation réelle en train d'être réglée du dispositif d'entraînement (5, 7) respectif.

13. Système d'entraînement (1) doté d'un dispositif de diagnostic selon la revendication 12 et/ou mettant en oeuvre le procédé selon l'une quelconque des revendications 1 à 11 ou plusieurs d'entre elles, avec au moins deux dispositifs d'entraînement (4), notamment un moteur électrique (8) et un moteur à combustion interne (6), et au moins un embrayage de coupure (17) couplant les dispositifs d'entraînement (4) de façon réglable, **caractérisé en ce que** les vitesses de rotation théoriques des dispositifs d'entraînement (4) peuvent être réglées à des valeurs prédéfinies et qu'un état de défaillance peut être défini à partir de la vitesse de rotation réelle en train d'être réglée du dispositif d'entraînement (5, 7) respectif.
